# EUROPÄISCHE PATENTANMELDUNG

(11) **EP 0 573 952 A2**
(43) Veröffentlichungstag der Anmeldung: **15.12.1993**
(21) Anmeldenummer: 93109184.7
(22) Anmeldetag: 08.06.1993
(51) Int. Cl.: G01N 3/04

(54) **Spannvorrichtung für Probenkörper**

(30) Priorität: 11.06.1992 DE 4219084
(71) Anmelder: MTU MOTOREN- UND TURBINEN-UNION MÜNCHEN GMBH, D-80976 München (DE)
(72) Erfinder: Lechner, Karl, D-8031 Gröbenzell (DE)

(57) **Zusammenfassung**

Eine Spanneinrichtung für Probenkörper 10 in einem Werkstoffprüfstand weist zwei Probeneinspannköpfe 1 mit jeweils einem Greifer 14 und einem Druckanker 7 auf, zwischen welchen ein Probenende 9 des Probenkörpers 10 einspannbar ist, wobei der Greifer 14 mit den Probenenden 9 über eine Pulverfüllung 18 in Kontakt steht. Hierdurch kann die Einleitung von unerwünschten Biegemomenten in dem Probenkörper 10 aufgrund von Fehlstellungen der Probeneinspannköpfe 1 zum Probenkörper 10 durch die hydrostatische Wirkung der Pulverfüllung 18 vermieden werden.

## Beschreibung

Die Erfindung betrifft eine Spannvorrichtung für Probenkörper in einem Werkstoffprüfstand, wobei der in Prüfkraftrichtung ausgerichtete Probenkörper über seine beiden Probenenden, die den Probenschaft einschließen, zwischen zwei Probeneinspannköpfen einspannbar ist. Eine solche Vorrichtung ist aus der DE 37 03 109 bekannt.

Bei der statischen als auch dynamischen Prüfung von Werkstoffen, wie z.B. bei Zug- bzw. Zug-Druck-Versuchen, unterliegt der Probenkörper infolge von Fluchtungsfehlern, Fertigungsungenauigkeiten des Prüfkörpers und Ungenauigkeiten der Prüfmaschine einer mehr oder minder großen Biegemomentenbeanspruchung. Diese zusätzlichen Biegemomente überlagern sich der Prüfbeanspruchung und führen zur Verfälschung der Prüfergebnisse. Geringe Zentrierfehler wirken sich insbesondere bei sehr steifen Proben und spröden Werkstoffen (z.B. Keramik) extrem stark auf die Biegemomenterhöhung aus. Werden Proben einer Druckprüfung unterzogen, dann besteht bei sehr langen Proben und bei Schieflage der Einspannvorrichtung eine zunehmende Ausknickgefahr. Für ein möglichst exaktes Meßergebnis ist daher von großer Bedeutung, diese Biegemomente weitgehend zu reduzieren.

Eine weitere Problemquelle stellt die Schraubverbindung zwischen Probenkörper und Probeneinspannkopf dar. Setzbewegungen und Fließerscheinungen in den Gewindegängen sowie die hohe Kerbwirkung insbesondere bei dynamischen Prüfungen führen häufig zu Fehlversuchen aufgrund von Meßfehlern oder Beschädigungen am Probenkörper.

Eine gewisse Abhilfe schafft hier die in der DE 37 03 109 offenbarte Spannvorrichtung. Hierzu liegt ein Druckanker auf den Probenenden eines Probenkörpers flach auf. Zu dem ist auf das Probenende ein Gewindespannkopf aufgeschraubt, über den eine Spannhülse gestülpt ist, welche mit dem Druckanker gekoppelt ist, wodurch das Probenende zwischen Druckanker und Spannhülse geklemmt werden kann. Zur Übertragung der Prüfkraft ist das vom Probenkörper abgewandte Ende des Druckankers mit der Prüfmaschine gekoppelt. Nachteilig ist jedoch, daß eine gleichmäßige, biegemomentenarme Krafteinleitung in den Probenkörper nur mit großem Justieraufwand möglich ist, wobei ein Nachjustieren bei Versuchen beispielsweise unter Hitzeeinwirkung sehr problematisch ist oder unmöglich ist. Desweiteren verbleibt die Kerbwirkung am Gewindegrund des Probenendes bei dynamischen Versuchen.

Hiervon ausgehend ist es Aufgabe der Erfindung, eine gattungsgemäße Spannvorrichtung derart zu verbessern, daß der Probenkörper biegemomentenarm in einen Werkstoffprüfstand eingespannt werden kann und die hohe Kerbwirkung von Gewindeköpfen am Probenkörper vermieden wird.

Erfindungsgemäß wird die Aufgabe dadurch gelöst, daß die beiden Probenenden jeweils eine quer zur Prüfkraftrichtung erstreckende, dem Probenschaft zugewandte, flanschartige Druckfläche aufweisen, und die Probenenden jeweils von einem Greifer unter Bildung eines abgeschlossenen Raumes zwischen der Druckfläche und des Greifers bis auf den Schaft des Probenkörpers umfaßt werden und der mit dem Probeneinspannkopf in Eingriff stehende Greifer über eine im Raum vorgesehene Pulverfüllung mit dem Probenende kraftübertragend koppelbar ist.

Die erfindungsgemäße Spannvorrichtung hat den Vorteil, aufgrund der hydrostatischen Wirkung des Pulvers eine gleichmäßige Lastverteilung auf das Probenende sowohl bei der Einspannung als auch bei der Beaufschlag des Probenkörpers mit einer Zugkraft zu ermöglichen. Die fluidähnliche, homogene Druckverteilung innerhalb des Pulvers sorgt für eine gleichmäßige Belastung der Druckflächen. Biegemomente aufgrund von Schiefstellungen zwischen Probenkörper und Einspannköpfen werden daher prinzipiell vermieden. Darüberhinaus sind Probenkörper beispielsweise durch Abdrehen einfach herstellbar, da die Probenenden lediglich einen Absatz zum Probenschaft hin aufweisen müssen. Das Drehen oder Drücken präziser Gewinde entfällt somit. Die Spannvorrichtung eignet sich daher insbesondere für spröde Probenwerkstoffe wie beispielsweise Keramik.

In einer bevorzugten Weiterbildung der Erfindung ist das Probenende zwischen einem Druckanker und einer Spannhülse spielfrei einspannbar, wodurch Zug-, Druck- Wechsellastversuche auch mit hohen Frequenzen durchführbar sind, da die lastübertragenden Elemente, die Spannhülse und der Druckanker, während des Versuchs stets in kraftübertragenden Kontakt stehen.

Darüber hinaus kann in weiterer Ausbildung der Erfindung die Einspannkraft weitgehend unabhängig von der Prüfkraft durch Verspannen der Spannhülse gegenüber dem Druckanker mittels einer Krafterzeugungseinrichtung präzise eingestellt werden.

Eine weitere Maßnahme zur Vermeidung unerwünschter Biegespannungen im Probenkörper aufgrund verkanteter Einspannung ist durch die Ausbildung der Erfindung gemäß Anspruch 4 gegeben. Die radiale Beabstandung des Probenkörpers zu den Bauteilen des Probeneinspannkopfes in Form eines Spaltes toleriert Fehlstellungen des Probeneinspannkopfes. Um jedoch diese Funktion nicht durch die Pulverfüllung zu gefährden, ist die Korngröße gerade so groß gewählt, daß das Pulver nicht in die Spalte eindringen kann. Die segmentierte Ausführung der Greiferbuchse dient einer besseren Handhabbarkeit bei der Montage bzw. Demontage des Probenkörpers.

Eine weitere Vereinfachung der Handhabung des Einspannkopfes wird dadurch erzielt, daß die Segmente der innerhalb der Spannhülse geführten Greiferbuchse in eine konzentrische Erweiterung radial ausweichen können, so daß diese das Probenende freigeben.

Zur Einspannung und zur Übertragung von Druck- Prüfkräften auf den Probenkörper dient der Druckanker, welcher gegen das Probenende gepreßt wird. Um jedoch Biegemomente in Probenkörpern aufgrund exzentrisch aufgebrachter Kräfte zu vermeiden, ist das Probenende vorzugsweise mit einem zur Längsachse des Probenkörpers koaxialen Kugelkopf versehen. Eine exzentrische Belastung des Probenkörpers kann somit weitgehend vermieden werden.

Um ein Klemmen der Pulverfüllung in den Spalten zwischen Greifer und Probenende wirksam zu verhindern, ist die Körnung des Pulvers auf die maximal mögliche Spaltgröße abgestimmt, so daß ein Pulverkorn stets größer ist als die umgebenden Spalten am Probeneinspannkopf.

In bevorzugter Weiterbildung der Erfindung ist die Pulverfüllung als Pulverring aus gebundenem Pulver ausgeführt, wodurch sich eine Montagevereinfachung ergibt.

Zusätzlich kann der Binder derart ausgewählt sein, daß sich seine Bindungswirkung ab einer gewissen Temperatur verliert, so daß die Pulverfüllung sich während der Versuchsdurchführung im Raum frei verteilen kann.

Eine bevorzugte Ausführungsform der Erfindung wird nachfolgend unter Bezugnahme auf die beigefügte Zeichnung erläutert.

Es zeigt:
- Fig. 1: einen Querschnitt einer Spannvorrichtung mit eingespanntem Probenkörper und
- Fig. 2: einen vergrößerten Ausschnitt der Spannvorrichtung im Einspannbereich des Probenkörpers.

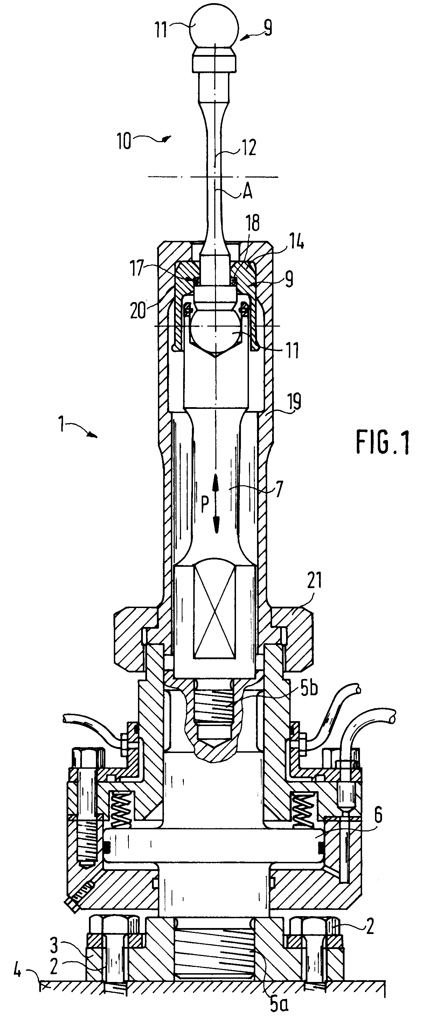

Der in Fig. 1 gezeigte hydraulische Probeneinspannkopf 1 ist einer von zwei Probeneinspannköpfen 1 eines Werkstoffprüfstandes welche einen Probenkörper 10 zwischen sich einspannen. Dieser Probeneinspannkopf 1 ist mit Befestigungsschrauben 2 über einen Anschlußflansch 3 an einen nicht näher gezeigten Belastungserzeuger 4 des Werkstoffprüfstandes angeschraubt. Der Anschlußflansch 3 ist über ein Gewinde 5a mit einem Hydraulikstempel 6 verbunden. Ebenfalls über ein Gewinde 5b ist an diesem ein Druckanker 7 befestigt.

Am probenseitigen Ende des Druckankers 7 weist dieser eine koaxiale Sacklochbohrung 8 auf, welche das Probenende 9 des Probenkörpers 10 aufnimmt. Hierzu sind die Probenenden 9 mit einem Kugelkopf 11 versehen, über den das Probenende 9 vom Druckanker 7 druckbeaufschlagbar ist. Die zylindrische Seitenwand und der kegelförmige Grund der Sacklochbohrung 8 zentrieren den Kugelkopf 11 im Sackloch 8 durch tangierendes Anliegen.

Die Probenenden 9 des symmetrischen Probenkörpers 10 sind im Anschluß an den Kugelkopf 11 zylindrisch ausgebildet, wobei die Probenenden 9 jeweils zum Probenschaft 12 hin unter Ausbildung einer flanschartigen Druckfläche 13 abschließen und in den dünneren Probenschaft 12 übergehen. Die ringförmige Druckfläche 13 des Probenendes 9 erstreckt sich senkrecht zur Probenlängsachse A.

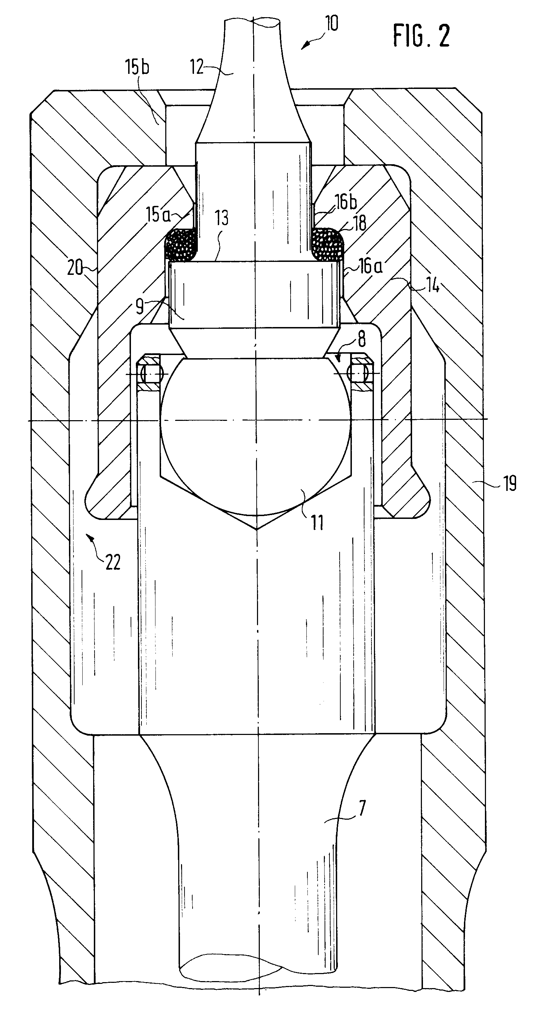

Im eingespannten Zustand werdne die beiden Probenenden 9, Fig. 1 und Fig. 2 zeigen jeweils nur eine Einspannstelle, von jeweils einer segmentierten, mehrteiligen und zylindrischen Greiferbüchse 14 umfaßt. Hierzu weist die Greiferbüchse 14 an einem Ende eine absatzförmige Verengung 15a auf. Diese umfaßt konzentrisch den Probenschaft 12 unter Beibehaltung eines Spalte 16b und ist zur Druckfläche 13 unter Bildung eines ringförmigen Raumes 17 axial beabstandet. Oberhalb der Verengung 15a ist die Innenwand der Greiferbüchse 14 zylindrisch und umfaßt das zylindrische Probenende 9 ebenfalls unter Beibehaltung eines Spaltes 16a. Über eine Pulverfüllung 18 des Raumes 17 steht die Greiferbüchse 14 im Kontakt mit der Druckfläche 13 des Probenendes 9.

Die Greiferbüchse 14 selbst ist innerhalb einer Spannhülse 19 auf einer zylindrischen Führungsbahn 20 zur Montage axial beweglich geführt und wird von einer absatzförmigen Verengung 15b der Spannhülse 19 an ihrer schaftseitigen Stirnfläche umfaßt, so daß der Probenkörper 10 über die Spannhülse 19, die Greiferbüchse 14 die Pulverfüllung 18 zugbelastbar ist. Die Spannhülse 19 und der innerhalb und koaxial zur Spannhülse 19 sich erstreckende Druckanker 7 sind mittels des Hydraulikstempels 6 gegeneinander verspannbar, so daß das Probenende 9 zwischen Druckanker 7 und Spannhülse 19 klemmbar ist.

Bei Einspannung des Probenkörpers 10 in zwei gegenüberliegende Probeneinspannköpfe 1 des Werkstoffprüfstandes ist der Probenkörper 10 bei entsprechenden axialen Verfahren der Einspannköpfe 1 auf Zug- bzw. Druck beanspruchbar.

Zur Demontage des Probenkörpers 10 können die Spannhülsen 19 durch Lösen einer Überwurfmutter 21 vom übrigen Probeneinspannkopf 1 gelöst und axial zum Probenkörper 10 verschoben werden. Die Segmente der Greiferbüchse 14 können hierdurch in eine Ausweitung 22 der Spannhülse 19 radial ausweichen und geben somit das Probenende 9 frei, so daß der Probenkörper 10 durch die Verengung 15b der Spannhülsen 19 hindurch herausgezogen werden kann. Die Montage erfolgt in entsprechend umgekehrter Reihenfolge.

## Patentansprüche

1. Spannvorrichtung für Probenkörper in einem Werkstoffprüfstand, wobei der in Prüfkraftrichtung ausgerichtete Probenkörper über seine beiden Probenenden, die den Probenschaft einschließen, zwischen zwei Probeneinspannköpfen einspannbar ist, dadurch gekennzeichnet, daß die beiden Probenenden (9) jeweils eine quer zur Prüfkraftrichtung erstreckende, dem Probenschaft (12) zugewandte, flanschartige Druckfläche (13) aufweisen, und die Probenenden (9) jeweils von einem Greifer (14') unter Bildung eines abgeschlossenen Raumes (17) zwischen der Druckfläche (13) und dem Greifer (14') umfaßt werden und der mit dem Probeneinspannkopf (1) in Eingriff stehende Greifer (14') über eine im Raum (17) vorgesehene Pulverfüllung (18) mit dem Probenende (9) kraftübertragend koppelbar ist.

2. Spannvorrichtung nach Anspruch 1, dadurch gekennzeichnet, daß die Probenenden (9) jeweils zwischen einem Druckanker (7) und einer Spannhülse (19) der Probeneinspannköpfe (1) einspannbar sind, wobei die Spannhülse (19) über den Greifer (14') und die Pulverfüllung (18) einerseits und der Druckanker (7) in Richtung des Probenschaftes (12) drückend, andererseits das Probenende (9) zwischen sich klemmen.

3. Spannvorrichtung nach Anspruch 2, dadurch gekennzeichnet, daß die Spannhülse (19) und der Druckanker (7) mittels eines Hydraulikstempels (6) zur Klemmung des Probenendes (9) gegeneinander verspannbar sind.

4. Spannvorrichtung nach einem der vorhergehenden Ansprüche, dadurch gekennzeichnet, daß der Greifer (14') einen inneren zylindrischen Durchbruch aufweist, dessen Durchmesser zur Aufnahme des Probenendes (9) unter Beibehaltung eines Spaltes (16a) abgestimmt ist, wobei der Greifer (14') an einem Ende des Durchbruches und konzentrisch zu diesem eine absatzförmige Verengung (15a) aufweist, deren Durchmesser zur Aufnahme des Probenschaftes (12) unter Beibehaltung eines Spaltes (16b) abgestimmt ist und die Verengung (15a) mit dem zylindrischen Durchbruch durch axiale Beabstandung zur Druckfläche (13) den Raum (17) bildet.

5. Spannvorrichtung nach einem der vorhergehendne Ansprüche, dadurch gekennzeichnet, daß der Greifer (14') als mehrteilige, segmentierte Greiferbuchse (14) ausgebildet ist.

6. Spannvorrichtung nach Anspruch 5, dadurch gekennzeichnet, daß die Greiferbuchse (14) axial innerhalb der Spannhülse (19) auf einer Führungsbahn (20) verschiebbar ist und die Spannhülse (19) im Anschluß an die Führungsbahn (20) eine konzentrische Ausweitung (22) zum radialen Ausweichen der Segmente der Greiferbuchse (14) aufweist, wobei die Ausweitung (22) auf die zur Freigabe des Probenendes (9) notwendige Ausweichbewegung der Segmente abgestimmt ist.

7. Spannvorrichtung nach einem der vorhergehenden Ansprüche, dadurch gekennzeichnet, daß die Probenenden (9) jeweils einen zum Probenkörper (10) konzentrischen, vom Probenschaft (12) abgewandten Kugelkopf (11) aufweisen, welche durch eine entsprechende zentrische Koppelung vom Druckanker (7) druckbeaufschlagbar sind.

8. Spannvorrichtung nach einem der vorhergehenden Ansprüche, dadurch gekennzeichnet, daß die Körnung der Pulverfüllung (18) auf die Spaltgröße zwischen Greifer (14') und Probenende (9) bzw. Probenschaft (12) gegen Eindringen von Pulver in die Spalte (16a,b) abgestimmt ist.

9. Spannvorrichtung nach einem der vorhergehenden Ansprüche, dadurch gekennzeichnet, daß die Pulverfüllung (18) ein Pulverring aus gebundenem Pulver ist.

10. Spannvorrichtung nach Anspruch 9, dadurch gekennzeichnet, daß die Bindung des Pulvers durch Erwärmung lösbar ist.

11. Spannvorrichtung nach einem der vorhergehenden Ansprüche, dadurch gekennzeichnet, daß die Pulverfüllung (18) ein Metall-, oder Metalloxydpulver ist.
